# EUROPEAN PATENT APPLICATION

(11) **EP 4 625 785 A1**
(43) Date of publication of application: **01.10.2025**
(21) Application number: 25165735.9
(22) Date of filing: 24.03.2025
(51) Int. Cl.: H02K 41/03

(54) **STATOR ASSEMBLY, LINEAR MOTOR, SUSPENSION ASSEMBLY, AND VEHICLE**

(30) Priority: 29.03.2024 CN 202420663078 U
(71) Applicant: BYD Company Limited, Shenzhen, Guangdong 518118 (CN)
(72) Inventor: LIU, Jun, Shenzhen, 518118 (CN); MA, Bingqing, Shenzhen, 518118 (CN); TAN, Guodong, Shenzhen, 518118 (CN)
(74) Representative: Mathys & Squire

(57) **Abstract**

The present disclosure discloses a stator assembly, a linear motor, a suspension assembly, and a vehicle. The stator assembly includes a stator winding, a stator core shaft, and a first detection component. A shaft wall of the stator core shaft is provided with a first cooling water channel and a second cooling water channel extending along an axial direction of the stator core shaft. The first cooling water channel and the second cooling water channel are configured to cool at least the stator winding. The first detection component is arranged on the shaft wall of the stator core shaft. The first detection component is configured to detect a position of a rotor assembly. The first detection component, the first cooling water channel, and the second cooling water channel are arranged spaced away along a circumferential direction of the stator core shaft. According to the stator assembly of embodiments of the present disclosure, the proper arrangement of the positions of the first detection component, the first cooling water channel, and the second cooling water channel on the stator core shaft can improve structural compactness of the stator assembly and improve a cooling effect.

## Description

### FIELD

The present disclosure relates to the field of vehicle technologies, and in particular, to a stator assembly, a linear motor, a suspension assembly, and a vehicle.

### BACKGROUND

Generally, a motor includes a primary assembly, a secondary assembly, and a position detection assembly. The position detection assembly includes a first detection component and a second sensing member. The first detection component cooperates with the second sensing member to detect a relative motion between the primary assembly and the secondary assembly. In the related art, the primary assembly is further provided with a water channel, and the improper arrangement of the water channel and the detection assembly reduces space utilization, which does not help simplify the motor's structure.

### SUMMARY

The present disclosure is intended to resolve at least the technical problem existing in the related art. In view of this, the present disclosure provides a stator assembly, where a water channel and a first detection component are arranged spaced away along a circumferential direction, so that structural compactness of the stator assembly can be improved, which does not help simplify a motor's structure.

A stator assembly according to embodiments of the present disclosure includes a stator winding, a stator core shaft, and a first detection component. A shaft wall of the stator core shaft is provided with a first cooling water channel and a second cooling water channel extending along an axial direction of the stator core shaft. The first cooling water channel and the second cooling water channel are configured to cool at least the stator winding. The first detection component is arranged on the shaft wall of the stator core shaft. The first detection component is configured to detect a position of a rotor assembly. The first detection component, the first cooling water channel, and the second cooling water channel are arranged spaced away along a circumferential direction of the stator core shaft.

According to the stator assembly of the embodiments of the present disclosure, the proper arrangement of the positions of the first detection component, the first cooling water channel, and the second cooling water channel on the stator core shaft can improve structural compactness of the stator assembly and improve a cooling effect.

In addition, the stator assembly according to the embodiments of the present disclosure may further have the following additional technical features.

In some examples of the present disclosure, a first end of the first cooling water channel is provided with a water channel inlet. A first end of the second cooling water channel is provided with a water channel outlet. The water channel inlet and the water channel outlet are located at a same side of the stator core shaft. A second end of the first cooling water channel is in communication with a second end of the second cooling water channel.

In some examples of the present disclosure, an inner peripheral wall of the stator core shaft is further provided with a first boss, a second boss, and a third boss protruding radially inward. The first boss, the second boss, and the third boss are arranged spaced away along the circumferential direction of the stator core shaft. The first cooling water channel is arranged in the first boss. The second cooling water channel is arranged in the second boss. The first detection component is arranged on an outer peripheral wall of the stator core shaft corresponding to the third boss.

In some examples of the present disclosure, the stator assembly further includes a conductive assembly. The conductive assembly includes a conductive member. The conductive member is configured to electrically connect the stator winding and a motor controller. The first cooling water channel and the second cooling water channel jointly exchange heat with the conductive assembly and the stator winding.

In some examples of the present disclosure, the outer peripheral wall of the stator core shaft is provided with an accommodating groove. The first detection component is arranged in the accommodating groove.

In some examples of the present disclosure, the stator assembly further includes a cover member. The cover member covers an opening of the accommodating groove.

In some examples of the present disclosure, a part of the peripheral wall of the stator core shaft is configured with the accommodating groove.

In some examples of the present disclosure, an axial end of the accommodating groove is open to define a mounting port for the first detection component. The stator assembly further includes a blocking member for blocking the mounting port.

In some examples of the present disclosure, the cover member is sleeved on the outer peripheral wall of the stator core shaft.

In some examples of the present disclosure, the cover member includes a body portion and a cover plate. The body portion and the cover plate are separate members. The body portion is fixed to the stator core shaft and is a magnetic material member. The cover plate is fixed to the body portion and is arranged radially directly opposite to the first detection component. The cover plate is a non-magnetic material member.

A linear motor according to the embodiments of the present disclosure includes the foregoing stator assembly and a rotor assembly. A second detection component is arranged on the rotor assembly. The second detection component cooperates with a first detection component to detect a position of the rotor assembly.

According to the linear motor in the embodiments of the present disclosure, the arrangement of the foregoing stator assembly can improve structural compactness of a structural motor, which does not help simplify a motor's structure.

A suspension assembly according to the embodiments of the present disclosure includes the foregoing linear motor.

According to the suspension assembly in the embodiments of the present disclosure, the foregoing linear motor is arranged on the suspension assembly, and the first detection component, the first cooling water channel, and the second cooling water channel in the linear motor are arranged spaced away along the circumferential direction of the stator core shaft, so that the structural compactness can be improved, which is conducive to simplifying a structure of the suspension assembly, and improving operation stability of the suspension assembly.

A vehicle according to the embodiments of the present disclosure includes the foregoing suspension assembly.

According to the vehicle in the embodiments of the present disclosure, the foregoing suspension assembly is applied to the vehicle to simplify a structure of the vehicle and improve operation stability of the vehicle.

Additional aspects and advantages of the present disclosure will be set forth, in part, from the following descriptions, and in part will be apparent from the following descriptions, or may be learned by practice of the present disclosure.

### BRIEF DESCRIPTION OF THE DRAWINGS

The foregoing and/or additional aspects and advantages of the present disclosure will become apparent and comprehensible from the following descriptions of the embodiments with reference to the accompanying drawings.
FIG. 1 is a schematic structural diagram of a stator assembly according to some embodiments of the present disclosure;
FIG. 2 is a cross-sectional view of a stator assembly cooperating with a conductive assembly according to some embodiments of the present disclosure;
FIG. 3 is a partial schematic structural diagram of a stator assembly according to some embodiments of the present disclosure (a conductive assembly and a stator winding are not shown);
FIG. 4 is a schematic structural diagram of a stator assembly according to some embodiments of the present disclosure;
FIG. 5 is a schematic structural diagram of a stator core shaft according to some embodiments of the present disclosure;
FIG. 6 is a schematic structural diagram of a stator assembly according to some embodiments of the present disclosure (a state when a cover plate covers a first detection component is shown);
FIG. 7 is a schematic structural diagram of a stator assembly according to some embodiments of the present disclosure (a state when a cover plate is separated from a body portion is shown);
FIG. 8 is a schematic structural diagram of a base according to some embodiments of the present disclosure; and
FIG. 9 is a model diagram of a first cooling water channel and a second cooling water channel according to some embodiments of the present disclosure.

In the drawings:
100: stator assembly; 11: stator core shaft; 111: first boss; 112: second boss; 113: third boss; 115: first shaft section; 116: second shaft section; 117. first mounting surface; 118: second mounting surface; 110: first cooling water channel; 110a: first water inlet section; 110b: second water inlet section; 101: water channel inlet; 120: second cooling water channel; 120a: first water outlet section; 120b: second water outlet section; 102: water channel outlet; 103: accommodating groove; 104: side hole; 105: middle hole; 12: stator winding; 121: lead wire; 13: stator iron core; 30: detection device; 31: first detection component; 40: conductive assembly; 41: base; 411: convex rib; 412: positioning fitting portion; 401: connection groove; 42: conductive member; 50: cover member; 51: body portion; 52: cover plate; 53: mounting boss; 60: blocking member.

### DETAILED DESCRIPTION

The following describes embodiments of the present disclosure in detail. Examples of the embodiments are shown in the accompanying drawings, in which the same or similar reference signs in all the accompanying drawings indicate same or similar components or components having the same or similar functions. Embodiments described below with reference to the accompanying drawings are exemplary and used only for explaining the present disclosure, and should not be construed as a limitation on the present disclosure.

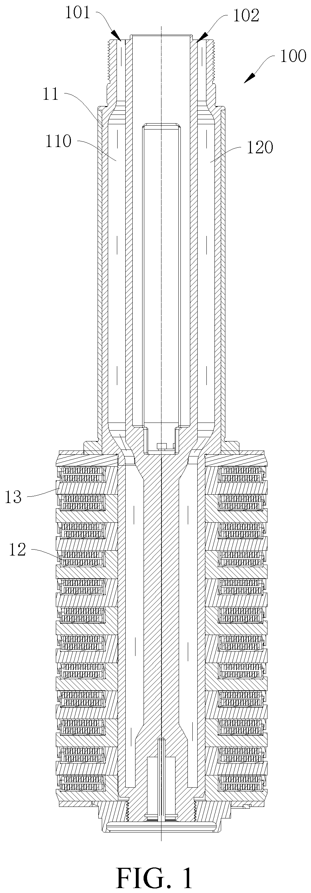

A stator assembly 100 according to the embodiments of the present disclosure is described below with reference to FIG. 1 to FIG. 9. The stator assembly 100 includes a stator winding 12 and a stator core shaft 11. A shaft wall of the stator core shaft 11 is provided with a first cooling water channel 110 and a second cooling water channel 120 extending along an axial direction of the stator core shaft 11. A cooling medium may be circulated in the first cooling water channel 110 and the second cooling water channel 120 to cool the stator winding 12, so that a temperature of the stator winding 12 during operation can be reduced, which is conducive to improving power of a motor, to ensure operation stability of the motor. The extending of the first cooling water channel 110 and the second cooling water channel 120 along the axial direction of the stator core shaft 11 can increase an extension length of the cooling water channel, and increase a fitting area between the cooling water channel and the stator core shaft 11, thereby improving heat exchange efficiency and a cooling effect.

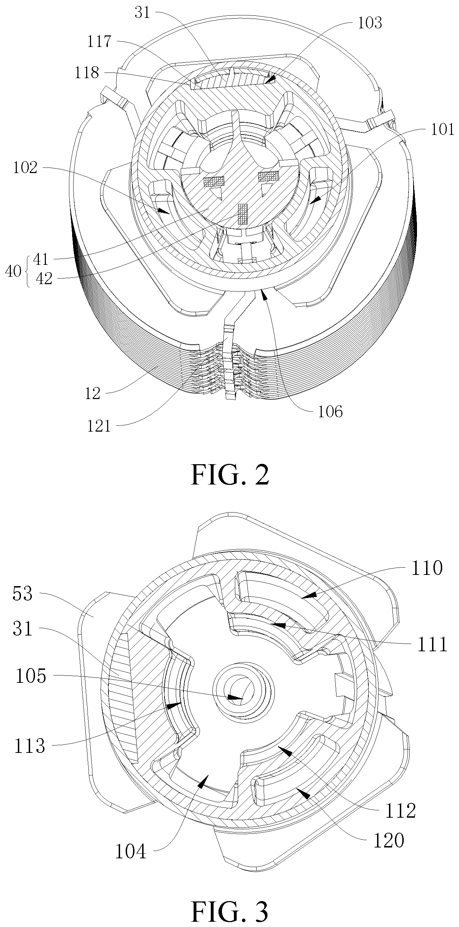

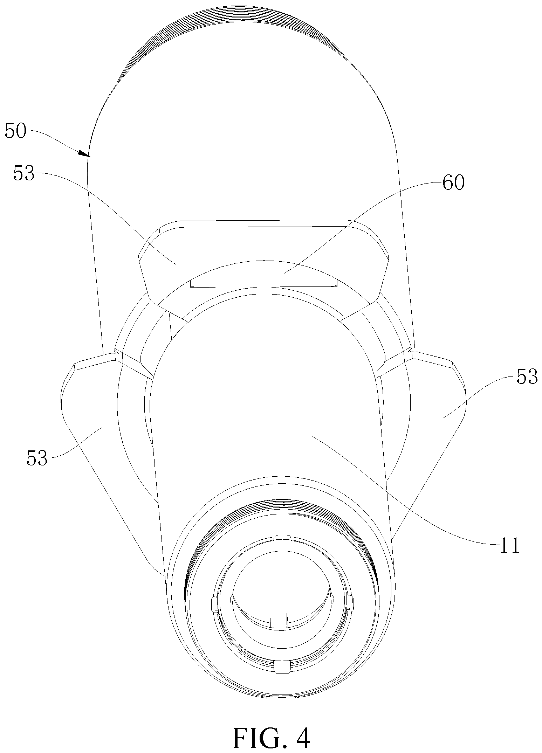

Further, with reference to FIG. 3 and FIG. 4, the stator assembly 100 further includes a first detection component 31. The first detection component 31 is arranged on the shaft wall of the stator core shaft 11. The first detection component 31 is configured to detect a position of a rotor assembly. The first detection component 31, the first cooling water channel 110, and the second cooling water channel 120 are arranged spaced away along a circumferential direction of the stator core shaft 11. Specifically, during operation of the motor, the rotor assembly and the stator assembly 100 move relative to each other. A position change of the rotor assembly can be detected through the arrangement of the first detection component 31, which is conducive to improving detection stability and detection accuracy, thereby improving the operation stability of the motor. The first detection component 31, the first cooling water channel 110, and the second cooling water channel 120 are arranged spaced away along the circumferential direction of the stator core shaft 11. Therefore, a circumferential space of the stator core shaft 11 can be fully used to implement proper arrangement of the first detection component 31, the first cooling water channel 110, and the second cooling water channel 120, which can improve structural compactness of the stator assembly 100, and achieve a position detection effect and the cooling effect. In addition, the first detection component 31, the first cooling water channel 110, and the second cooling water channel 120 are arranged spaced away to further improve balance of the stator core shaft 11. Spacing distances between the first detection component 31, the first cooling water channel 110, and the second cooling water channel 120 may be the same, to improve structural stability of the stator core shaft 11; or the first detection component 31, the first cooling water channel 110, and the second cooling water channel 120 may be arranged spaced away in different forms based on an actual application. The present disclosure is not limited thereto.

According to the stator assembly 100 of the embodiments of the present disclosure, the proper arrangement of the positions of the first detection component 31, the first cooling water channel 110, and the second cooling water channel 120 on the stator core shaft 11 can improve the structural compactness of the stator assembly 100 and the cooling effect.

With reference to FIG. 2, in some embodiments of the present disclosure, a first end of the first cooling water channel 110 is provided with a water channel inlet 101. A first end of the second cooling water channel 120 is provided with a water channel outlet 102. A second end of the first cooling water channel 110 is in communication with a second end of the second cooling water channel 120. In other words, the first cooling water channel 110 is in communication with the second cooling water channel 120. The cooling medium can enter through the water channel inlet 101 of the first cooling water channel 110, flow through the first cooling water channel 110 and the second cooling water channel 120, and then flow out through the water channel outlet 102 of the second cooling water channel 120. The cooling medium can fully flow through the first cooling water channel 110 and the second cooling water channel 120, and a flow time of the cooling medium in the cooling water channel can be increased, which improves the heat exchange efficiency and the cooling effect. The water channel inlet 101 and the water channel outlet 102 are located at a same side of the stator core shaft 11, that is, the cooling medium may exchange heat around the stator core shaft 11. In addition, the water channel inlet 101 and the water channel outlet 102 are located at the same side of the stator core shaft 11, which can facilitate the injection the cooling medium into the cooling water channel and recovery of the cooling medium, and can facilitate the connection of the water channel inlet 101 and the water channel outlet 102 to another structural member, for example, facilitate the communication of the water channel inlet 101 and the water channel outlet 102 with an external pipe or a connector, so that assembly efficiency of the stator assembly 100 can be improved. In addition, it can reduce a possibility of interference between the water channel inlet 101 and the water channel outlet 102 and the structural member (for example, a stator iron core 13 or the stator winding 12) on a peripheral wall of the stator core shaft 11, to ensure normal assembly of the stator assembly 100. Optionally, the stator core shaft 11 has a first end and a second end along the axial direction. The water channel inlet 101 and the water channel outlet 102 may be arranged on the first end or the second end of the stator core shaft 11.

With reference to FIG. 2 and FIG. 3, in some embodiments of the present disclosure, the first detection component 31 is located between the first cooling water channel 110 and the second cooling water channel 120, which can improve space utilization and structural balance. That is, the first detection component 31 separates the first cooling water channel 110 and the second cooling water channel 120, or the first detection component 31, the first cooling water channel 110, and the second cooling water channel 120 are staggered along the circumferential direction. Specifically, because the first cooling water channel 110 and the second cooling water channel 120 are arranged in the shaft wall of the stator core shaft 11, and strength of the position of the water channel is slightly weaker, separating the positions of the first cooling water channel 110 and the second cooling water channel 120 by the first detection component 31 can avoid low local structural strength of the stator assembly 100, and improve stability and balance of an overall structure of the stator assembly 100. In addition, the first cooling water channel 110 and the second cooling water channel 120 are not susceptible to interference along the circumferential direction of the stator core shaft 11, and areas of the first cooling water channel 110 and the second cooling water channel 120 may be appropriately increased, so that the cooling medium in the cooling water channel can fully exchange heat. In an actual application, sizes of the first cooling water channel 110 and the second cooling water channel 120 may be set based on a size of the first detection component 31, so that the circumferential space of the stator core shaft 11 can be fully used.

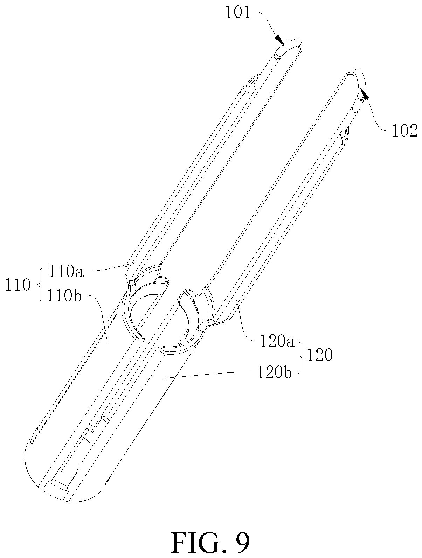

Specifically, with reference to FIG. 9, according to the stator assembly 100 of a specific embodiment of the present disclosure, the second ends of the first cooling water channel 110 and the second cooling water channel 120 are connected to form a "U"-shaped structure. That is, the first cooling water channel 110 and the second cooling water channel 120 are oppositely arranged on two sides along a radial direction of the stator core shaft 11, and are connected at an end portion along the axial direction of the stator core shaft 11. The water channel inlet 101 and the water channel outlet 102 are arranged on another end along the axial direction of the stator core shaft 11, or an open end of the "U"-shaped structure. In this way, the first cooling water channel 110 and the second cooling water channel 120 may be arranged around the stator core shaft 11, which is conducive to increasing the flow time of the cooling medium in the cooling water channel to achieve full heat exchange, thereby improving the cooling effect and avoiding energy waste.

Because the water channel is imaginary, for ease of understanding, FIG. 9 shows a model diagram of the first cooling water channel 110 and the second cooling water channel 120. With reference to FIG. 9, the first cooling water channel 110 includes a first water inlet section 110a and a second water inlet section 110b. The first water inlet section 110a and the second water inlet section 110b are connected along the axial direction of the stator core shaft 11. A first end of the first water inlet section 110a is provided with a water channel inlet 101. A second end of the first water inlet section 110a is in communication with a first end of the second water inlet section 110b. The second cooling water channel 120 includes a first water outlet section 120a and a second water outlet section 120b. The first water outlet section 120a and the second water outlet section 120b are connected along the axial direction. A first end of the first water outlet section 120a is provided with a water channel outlet 102. A second end of the first water outlet section 120a is in communication with a first end of the second water outlet section 120b. The second end of the second water inlet 110b is in communication with the second end of the second water outlet section 120b.

With reference to FIG. 3, in some embodiments of the present disclosure, an inner peripheral wall of the stator core shaft 11 is further provided with a first boss 111, a second boss 112, and a third boss 113 protruding radially inward. The first boss 111, the second boss 112, and the third boss 113 are arranged spaced away along the circumferential direction of the stator core shaft 11. Specifically, an inner wall of the stator core shaft 11 is provided with a plurality of bosses arranged spaced away, to support the stator core shaft 11 and enhance structural strength. In addition, the first cooling water channel 110 may be arranged in the first boss 111. The second cooling water channel 120 may be arranged in the second boss 112. The first detection component 31 is arranged on an outer peripheral wall of the stator core shaft 11 corresponding to the third boss 113. In this way, a space in which the first boss 111 and the second boss 112 protrude relative to the peripheral wall of the stator core shaft 11 can be fully utilized. The cooling water channel is arranged in the boss. The boss can further protect the cooling water channel, to further improve the structural stability. The first detection component 31 is arranged opposite to the third boss 113, which can also improve the structural stability of a mounting position of the first detection component 31, and facilitate positioning of the first detection component 31. Therefore, the first boss 111, the second boss 112, and the third boss 113 can facilitate positioning of the first cooling water channel 110, the second cooling water channel 120, and the first detection component 31 along the circumferential direction, and can also improve the structural compactness and the structural strength of the stator assembly 100.

Further, with reference to FIG. 2 and FIG. 3, the first boss 111, the second boss 112, and the third boss 113 form three side holes 104 along the circumferential direction of the stator core shaft 11. A middle hole 105 is formed on a radial inner side of the first boss 111, the second boss 112, and the third boss 113 along the radial direction of the stator core shaft 11. The middle hole 105 is located at a radial inner side of the first cooling water channel 110 and the second cooling water channel 120. The three side holes 104 are respectively provided between the first cooling water channel 110 and the second cooling water channel 120, between the first cooling water channel 110 and the first detection component 31, and between the second cooling water channel 120 and the first detection component 31. The three side holes 104 may separate the first detection component 31, the first cooling water channel 110, and the second cooling water channel 120 along the circumferential direction.

With reference to FIG. 2, in some embodiments of the present disclosure, the stator assembly 100 further includes a conductive assembly 40. The conductive assembly 40 includes a conductive member 42. The conductive member 42 is configured to electrically connect the stator winding 12 and a motor controller to transfer electric energy.

The first cooling water channel 110 and the second cooling water channel 120 jointly exchange heat with the conductive assembly 40 and the stator winding 12. That is, both the first cooling water channel 110 and the second cooling water channel 120 can exchange heat with the stator winding 12 and the conductive assembly 40. The first cooling water channel 110 and the second cooling water channel 120 cooperate with each other to improve the cooling effect.

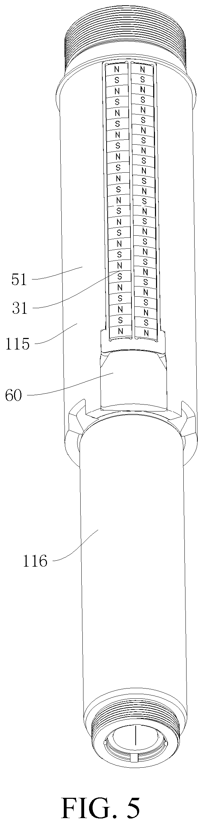

Specifically, with reference to FIG. 2 and FIG. 5, the stator core shaft 11 includes a first shaft section 115 and a second shaft section 116. A shaft diameter of the first shaft section 115 is greater than a shaft diameter of the second shaft section 116. The conductive assembly 40 is arranged in the first shaft section 115. The stator winding 12 is sleeved on the second shaft section 116.

A bottom end of the first shaft section 115 is connected to a top end of the second shaft section 116. Because the shaft diameter of the first shaft section 115 is greater than the shaft diameter of the second shaft section 116, the conductive assembly 40 may be arranged in the first shaft section 115, to ensure a sufficient mounting space in the conductive assembly 40. The stator winding 12 is sleeved on a radial outer side of the second shaft section 116. One end of the conductive assembly 40 close to the second shaft section 116 along the axial direction is electrically connected to the stator winding 12. The conductive assembly 40 is arranged in the first shaft section 115, to facilitate the electrical connection between the conductive assembly 40 and the stator winding 12 and the motor controller.

Further, with reference to FIG. 1, FIG. 5, and FIG. 9, the first water inlet section 110a and the first water outlet section 120a are arranged on the first shaft section 115. The second water inlet section 110b and the second water outlet section 120b are arranged on the second shaft section 116. Therefore, the first cooling water channel 110 can exchange heat with the conductive assembly 40 and the stator winding 12 respectively, and the second cooling water channel 120 can exchange heat with the conductive assembly 40 and the stator winding 12 respectively.

With reference to FIG. 2, the lead wire 121 of the stator winding 12 is located at a radial outer side of the stator core shaft 11. The shaft wall of the stator core shaft 11 is provided with a communication hole 106. The motor controller passes through the communication hole 106 and is electrically connected to the lead wire 121 and the conductive assembly 40 respectively. The conductive member 42 is electrically connected to the stator winding 12 and the motor controller respectively. After assembly, at least a part of the conductive assembly 40 is arranged inside the stator core shaft 11 (or the first shaft section 115), which can reduce a possibility of mechanical damage to the conductive assembly 40, improve insulation of the conductive assembly 40, and ensure normal operation of the stator assembly 100. In addition, it can reduce the space occupied by the conductive assembly 40 and the stator core shaft 11, improve the structural compactness of the stator assembly 100, and facilitate the stator assembly 100 and miniaturization of the stator assembly 100.

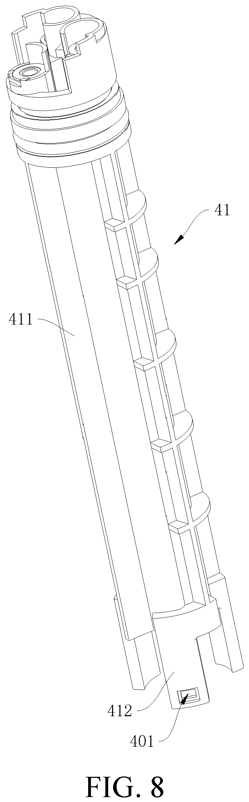

With reference to FIG. 2 and FIG. 8, the conductive assembly 40 includes a base 41 and three conductive members 42. The base 41 wraps the conductive members 42. The base 41 has a convex rib 411 extending along the axial direction of the stator core shaft 11. The convex rib 411 abuts against the first boss 111 to position the conductive assembly 40. An end portion of the base 41 is further provided with a positioning fitting portion 412 for limiting the circumferential rotation freedom of the conductive assembly 40. The positioning fitting portion 412 is further provided with a connection groove 401. Specifically, one end of the motor controller is inserted into the connection groove 401 through the communication hole 106 and is connected to the conductive member 42, to implement the electrical connection between the motor controller and the conductive assembly 40. Similarly, another end of the motor controller is connected to the lead wire 121 of the stator winding 12 by welding, to implement the electrical connection between the motor controller and the lead wire 121. Optionally, the base 41 is made of an insulating material, such as plastic.

More specifically, with reference to FIG. 3, the base 41 is arranged in the middle hole 105. The three conductive members 42 are arranged in the three side holes 104 respectively in one-to-one correspondence. The middle hole 105 may be used for positioning the base 41, to improve connection stability. The three side holes 104 may separate the first detection component 31, the first cooling water channel 110, and the second cooling water channel 120. In this way, the three side holes 104 are provided at positions at which spacings between the first detection component 31, the first cooling water channel 110, and the second cooling water channel 120 can be fully used, thereby improving the space arrangement effect and the space utilization. In addition, the first cooling water channel 110 and the second cooling water channel 120 arranged in the first boss 111 and the second boss 112 may also be used for cooling the conductive assembly 40, and are compact in structure, which is conducive to improving the cooling effect.

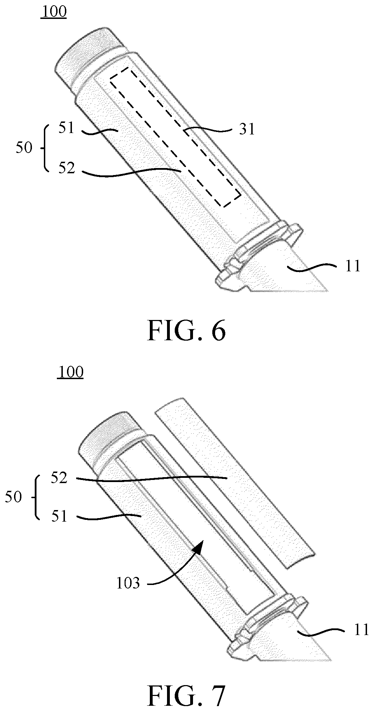

In some embodiments of the present disclosure, with reference to FIG. 2 and FIG. 7, an outer peripheral wall of the stator core shaft 11 is provided with an accommodating groove 103, and the first detection component 31 is arranged in the accommodating groove 103, which can facilitate assembly of the first detection component 31 on the stator core shaft 11. For example, during mounting of the first detection component 31, the first detection component 31 can be inserted into the accommodating groove 103, which can facilitate quick assembly and improve assembly precision.

With reference to FIG. 4 and FIG. 6, in some embodiments of the present disclosure, the stator assembly 100 further includes a cover member 50. The cover member 50 covers an opening of the accommodating groove 103. Therefore, the cover member 50 can position the first detection component 31 in the accommodating groove 103, protect and fix the first detection component 31, and improve assembly stability.

In some embodiments of the present disclosure, a part of the peripheral wall of the stator core shaft 11 is deformed inward to define the accommodating groove 103. Therefore, the first detection component 31 may be directly connected to the stator core shaft 11, and the first detection component 31 may be directly positioned on the stator core shaft 11 without a separate assembly structure, which is conducive to simplifying the structure and improving detection accuracy.

Specifically, with reference to FIG. 2, a bottom wall of the accommodating groove 103 forms a first mounting surface 117. A second mounting surface 118 is connected to two opposite sides of the first mounting surface 117. The first mounting surface 117 is attached to the first detection component 31. The second mounting surface 118 limits two opposite sides of the first detection component 31 along the circumferential direction. Both the first mounting surface 117 and the second mounting surface 118 are flat, which facilitates a stable connection between the first detection component 31 and the accommodating groove 103.

In some embodiments of the present disclosure, with reference to FIG. 4 and FIG. 5, an axial end of the accommodating groove 103 is open to define a mounting port of the first detection component 31. Therefore, the first detection component 31 may be assembled in the accommodating groove 103 from the mounting port. The stator assembly 100 further includes a blocking member 60 for blocking the mounting port after assembly. The first detection component 31 may be stably positioned in the accommodating groove 103. The blocking member 60 may further protect a sensing member from an external environment, which is conducive to improving a detection effect of the first detection component 31.

In some embodiments of the present disclosure, the cover member 50 is sleeved on the outer peripheral wall of the stator core shaft 11. Therefore, the cover member 50 can protect the stator core shaft 11, and can further enhance the overall structural strength of the stator core shaft 11.

In some embodiments of the present disclosure, with reference to FIG. 6 and FIG. 7, the cover member 50 includes a body portion 51 and a cover plate 52. The body portion 51 and the cover plate 52 are separate members. The body portion 51 is fixed to the stator core shaft 11 and is a magnetic material member. That is, the body portion 51 can improve the structural stability of the stator core shaft 11, and facilitate the guidance and concentration of a magnetic field, which is conducive to improving operation efficiency and performance of the stator assembly 100.

The cover plate 52 is fixed to the body portion 51 and is arranged radially directly opposite to the first detection component 31. The cover plate 52 is a non-magnetic material member. Specifically, a magnetic field generated by a magnetic stripe of the first detection component 31 does not pass through the non-magnetic material, so that the second detection component on the rotor assembly can read a waveform of the first detection component 31. In other words, the cover member 50 may be constructed in a form of a part being a magnetic material member and a part being a non-magnetic material member, which can ensure the detection effect while improving the structural strength. To improve overall hardness and strength of the stator core shaft 11, the cover member 50 may be sleeved on the outer peripheral wall of the stator core shaft 11. The cover member 50 includes the body portion 51 and the cover plate 52. During assembly, the body portion 51 with higher hardness and strength, that is, a magnetic stainless steel material, may be sleeved on the outer peripheral wall of the stator core shaft 11. Further, the body portion 51 may be provided with an opening opposite to the first detection component 31. The cover plate 52 is assembled at the opening. The cover plate 52 may be a non-magnetic steel material. The body portion 51 and the cover plate 52 may be welded as a whole. FIG. 6 shows a state when the cover plate 52 covers the first detection component 31. FIG. 7 shows a state when the cover plate 52 is separated from the body portion 51.

The first detection component 31 can detect a position by detecting a change in the magnetic field. Setting the cover plate 52 to a non-magnetic member can avoid interference to the first detection component 31 due to magnetization of the cover plate 52, to ensure that the magnetic field of the first detection component 31 is not affected, thereby improving the detection accuracy. The first detection component 31 may be a magnetic position sensor.

With reference to FIG. 4, the outer peripheral wall of the cover member 50 is provided with a mounting boss 53. The mounting boss 53 may provide a stable support point for the stator core shaft 11, for example, may provide a stable support point for assembly of the stator core shaft 11 with other components, to facilitate fixing and support of the stator core shaft 11, and facilitate assembly of the stator core shaft 11 with other components. A plurality of mounting bosses 53 may be arranged spaced away along the circumferential direction of the stator core shaft 11, to improve the support effect and the structural stability.

A linear motor according to the embodiments of the present disclosure includes the foregoing stator assembly 100 and a rotor assembly. A second detection component is arranged on the rotor assembly. The second detection component cooperates with a first detection component 31 to detect a position of the rotor assembly. Specifically, the rotor assembly cooperates with the stator assembly 100 to move reciprocally, to drive the load to achieve a linear motion. The first detection component 31 arranged on the stator assembly 100 and the second detection component arranged on the rotor assembly can detect a relative position between the stator assembly 100 and the rotor assembly. For example, the first detection component 31 may detect a position of the rotor assembly relative to the stator assembly 100. The second detection component may detect a position of the stator assembly 100 relative to the rotor assembly. The first detection component 31 cooperates with the second detection component to improve detection accuracy.

According to the linear motor in the embodiments of the present disclosure, the arrangement of the foregoing stator assembly 100 leads to a more compact structure of the stator assembly 100, thereby improving structural compactness of a structural motor, which is conducive to simplifying a structure of the motor, and improving performance of the motor.

It should be noted that, according to the stator assembly 100 in the embodiments of the present disclosure, the rotor assembly may move relative to the stator assembly 100, or the stator assembly 100 may move relative to the rotor assembly.

A suspension assembly according to the embodiments of the present disclosure includes the foregoing linear motor. The foregoing linear motor is arranged on the suspension assembly, and the first detection component 31, the first cooling water channel 110, and the second cooling water channel 120 in the linear motor are arranged spaced away along the circumferential direction of the stator core shaft 11, so that the structural compactness can be improved, which is conducive to simplifying a structure of the suspension assembly, and improving operation stability of the suspension assembly.

The suspension assembly in the embodiments of the present disclosure includes the linear motor in any one of the foregoing embodiments. It may be understood that, because the suspension assembly in the embodiments includes the linear motor in the foregoing embodiments, the suspension assembly includes at least a same beneficial effect as the motor. Details are not described herein again.

A vehicle according to the embodiments of the present disclosure includes the foregoing suspension assembly. The foregoing suspension assembly is applied to the vehicle to simplify a structure of the vehicle and improve operation stability of the vehicle.

A vehicle in the embodiments of the present disclosure includes the suspension assembly in the foregoing embodiments. The vehicle includes, but is not limited to, a passenger vehicle such as a pure electric vehicle or a hybrid vehicle, or a large engineering vehicle in non-severe conditions. It may be understood that, because the vehicle in the embodiments includes the suspension assembly in the foregoing embodiments, the vehicle includes at least a same beneficial effect as the suspension assembly. Details are not described herein again.

Specifically, in some embodiments, the vehicle further includes a vehicle body and wheels. The wheels are arranged on the vehicle body and are movable relative to the vehicle body. The suspension assembly further includes a suspension. A linear motor is arranged on the suspension. One end of the linear motor is connected to the vehicle body. When the linear motor runs stably, the linear motor can drive the wheels to move relative to the vehicle body. Therefore, a detection device can determine a relative displacement between the vehicle body and the wheels based on a position change between the stator assembly 100 and the rotor assembly (or a primary assembly and a secondary assembly).

In the descriptions of the present disclosure, it should be understood that orientation or position relationships indicated by the terms such as "length", "above", "below", "front", "rear", "bottom", "inside", "outside", "axial", "radial", and "circumferential" are based on orientation or position relationships shown in the accompanying drawings, and are used only for ease and brevity of illustration and descriptions, rather than indicating or implying that the mentioned device or component needs to have a particular orientation or needs be constructed and operated in a particular orientation. Therefore, such terms should not be construed as limiting of the present disclosure. In addition, features modified by "first" and "second" may explicitly or implicitly include one or more features. In the descriptions of the present disclosure unless otherwise stated, "a plurality of" means two or more than two.

In the descriptions of the present disclosure, it should be noted that, unless otherwise clearly specified and defined, terms such as "mounting", "interconnection", and "connection" shall be understood in a broad sense, for example, may be a fixing connection, a detachable connection, an integral connection, a mechanical connection, an electrical connection, a direct connection, an indirect connection by using an intermediate medium, and communication between interiors of two components. A person of ordinary skill in the art may understand specific meanings of the terms in the present disclosure according to specific situations.

In the descriptions of this specification, the descriptions of the reference terms such as "an embodiment", "some embodiments", "exemplary embodiments", "example", "specific example", or "some examples" means that the specific features, structures, materials or characteristics described with reference to the embodiment or example are included in at least one embodiment or example of the present disclosure. In this specification, schematic descriptions of the foregoing terms are not necessarily directed at a same embodiment or example. In addition, the described specific feature, structure, material, or characteristic may be combined in a proper manner in any one or more embodiments or examples.

Although the embodiments of the present disclosure have been shown and described, a person of ordinary skill in the art should understand that various changes, modifications, replacements and variations may be made to the embodiments without departing from the principles and spirit of the present disclosure, and the scope of the present disclosure is as defined by the appended claims and their equivalents.

## Claims

1. A stator assembly (100), comprising:
a stator winding (12);
a stator core shaft (11), a shaft wall of the stator core shaft (11) being provided with a first cooling water channel (110) and a second cooling water channel (120) extending along an axial direction of the stator core shaft (11), and the first cooling water channel (110) and the second cooling water channel (120) being configured to cool at least the stator winding (12); and
a first detection component (31), the first detection component (31) being arranged on the shaft wall of the stator core shaft (11), and the first detection component (31) being configured to detect a position of a rotor assembly,
wherein the first detection component (31), the first cooling water channel (110), and the second cooling water channel (120) are arranged spaced away along a circumferential direction of the stator core shaft (11).

2. The stator assembly according to claim 1, wherein a first end of the first cooling water channel (110) is provided with a water channel inlet (101), a first end of the second cooling water channel(120) is provided with a water channel outlet (102), the water channel inlet (101) and the water channel outlet (102) are located at a same side of the stator core shaft (11), and a second end of the first cooling water channel (110) is in communication with a second end of the second cooling water channel (120).

3. The stator assembly according to claim 2, wherein an inner peripheral wall of the stator core shaft (11) is further provided with a first boss (111), a second boss (112), and a third boss (113) protruding radially inward, the first boss (111), the second boss (112), and the third boss (113) are arranged spaced away along the circumferential direction of the stator core shaft (11), the first cooling water channel (110) is arranged in the first boss (111), the second cooling water channel (120) is arranged in the second boss (112), and the first detection component (31) is arranged on an outer peripheral wall of the stator core shaft (11) corresponding to the third boss (113).

4. The stator assembly according to claim 3, wherein the stator assembly (100) further comprises a conductive assembly (40), the conductive assembly (40) comprises a conductive member, and the conductive member is configured to electrically connect the stator winding (12) and a motor controller; and
the first cooling water channel (110) and the second cooling water channel (120) jointly exchange heat with the conductive assembly (40) and the stator winding (12).

5. The stator assembly according to any one of claims 1 to 4, wherein the outer peripheral wall of the stator core shaft (11) is provided with an accommodating groove (103), and the first detection component (31) is arranged in the accommodating groove (103).

6. The stator assembly according to claim 5, further comprising a cover member (50), the cover member (50) covering an opening of the accommodating groove (103).

7. The stator assembly according to claim 6, wherein a part of the peripheral wall of the stator core shaft (11) is configured with the accommodating groove (103).

8. The stator assembly according to claim 7, wherein an axial end of the accommodating groove (103) is open to define a mounting port for the first detection component (31), and the stator assembly (100) further comprises a blocking member (60) for blocking the mounting port.

9. The stator assembly according to claim 7, wherein the cover member (50) is sleeved on the outer peripheral wall of the stator core shaft (11).

10. The stator assembly according to claim 9, wherein the cover member (50) comprises a body portion (51) and a cover plate (52), the body portion (51) and the cover plate (52) are separate members, the body portion (51) is fixed to the stator core shaft (11) and is a magnetic material member, the cover plate (52) is fixed to the body portion (51) and is arranged radially directly opposite to the first detection component (31), and the cover plate (52) is a non-magnetic material member.

11. A linear motor, comprising:
the stator assembly (100) according to any one of claims 1 to 10; and
a rotor assembly, a second detection component being arranged on the rotor assembly, and the second detection component cooperating with a first detection component (31) to detect a position of the rotor assembly.

12. A suspension assembly, comprising the stator assembly (100) according to any one of claims 1 to 10 or the linear motor according to claim 11.

13. A vehicle, comprising the suspension assembly according to claim 12.
